Europäisches Patentamt

European Patent Office

Office européen des brevets

Veröffentlichungsnummer: **0 297 332**

**A1**

# EUROPÄISCHE PATENTANMELDUNG

Anmeldenummer: **88109363.7**

Anmeldetag: **13.06.88**

Int. Cl.⁴ **D01H 9/18 , B65G 19/02 , B65G 47/51**

Priorität: **01.07.87 DE 3721657**

Veröffentlichungstag der Anmeldung:
**04.01.89 Patentblatt 89/01**

Benannte Vertragsstaaten:
**CH DE FR IT LI**

Anmelder: **LOUIS SCHIERHOLZ GMBH & CO.KG**
**Arsterdamm 110**
**D-2800 Bremen 61(DE)**

Erfinder: **Langen, Manfred**
**Schulstrasse 58**
**D-4050 Mönchengladbach(DE)**
Erfinder: **Gebald, Gregor**
**Leppershütte 49**
**D-4050 Mönchengladbach(DE)**
Erfinder: **Wenger, Hartmut**
**Speckmannsweg 8**
**D-3008 Garbsen 7(DE)**

Vertreter: **von Creytz, Dietrich, Dipl.-Phys.**
**Tannenweg 25**
**D-5144 Wegberg-Beeck(DE)**

Spulenspeicher.

Ein Spulenspeicher mit Spulentransport zwischen zwei Bearbeitungsstationen läßt sich ohne großen Platzaufwand und ohne der Automatisierung - schwer zugängliche Ablege- und Wiederaufnahmemittel für die Spulen herstellen, wenn als Speicherplatz für jede Spule eine Einzelaufhängung an einem Trolleyzug vorgesehen ist und wenn der Trolleyzug auf einer eine Wendel enthaltenden Laufschiene geführt ist.

EP 0 297 332 A1

## "Spulenspeicher"

Die Erfindung betrifft einen Spulenspeicher mit einem Speicherplatz für jede Spule und mit Spulentransport zwischen zwei Bearbeitungsstationen, insbesondere zum Speichern und Transportieren bespulter Flyerhülsen..

Beim Herstellen, Bearbeiten und Verarbeiten von Garn in der Textilindustrie werden mit dem Garn bespulte Hülsen zwischen den einzelnen Stationen nach Möglichkeit automatisch weitertransportiert. Dabei werden Spulen, beispielsweise Flyerspulen, die mit einem gegen Stoß oder gegenseitige Reibung der Spulenkörper empfindlichen Garn bewickelt sind, mit Hilfe einer in die Spulenhülsen einzuführenden Drehaufhängung von einer Lieferstelle. z. B. einer Flyerspindel, abgehoben und mit Hilfe eines Trolleyzugs, an dem die Drehaufhängung befestigt ist, zur Weiterverarbeitung, zu einem Zwischenlager oder zum Versand gebracht. In dem Zwischenlager werden die Spulen aus ihrer Drehaufhängung gelöst und in einen Speicherplatz gesetzt, aus dem sie bei Bedarf. vorzugsweise in der Reihenfolge der Ablage, wieder herauszunehmen sind. Das Ablegen erfordert Handarbeit oder bei automatisiertem Betrieb aufwendige Mechaniken: beim Lagern können empfindliche Spulen, wie Flyerspulen, in einer für die Weiterverarbeitung störenden Weise beeinträchtigt werden.

Wenn Spulen in der Textilindustrie zwischen verschiedenen Maschinen- bzw. Gebäudeetagen transportiert werden sollen, könnte ein Trolleyzug mit pendelnd daran hängenden Spulen als Schrägaufzug ausgebildet werden. Der Platzaufwand für einen Schrägaufzug ist aber erheblich. In der Praxis wird es daher vorgezogen, die Spulen in einem Behälter abzulegen und mit Hilfe eines Vertikalaufzugs auf das jeweils gewünschte Niveau zu bringen. Auch diese Verfahrensweise ist einer Automatisierung nur schwer zugänglich, da die Spulen bei der Ablage im Aufzug von ihrem automatischen Transportmittel, insbesondere von der Drehaufhängung am Trolleyzug, gelöst werden müssen und im neuen Niveau wieder an einem automatischen Transportmittel zu befestigen sind.

Der Erfindung liegt die Aufgabe zugrunde, einen völlig automatisch zu betreibenden Spulenspeicher zu schaffen, in den auch mit empfindlichem Garn bewickelte Spulen ohne Beeinträchtigung der Garnqualität und oder Spulenwicklung selbsttätig einzuführen sind und aus dem die Spulen ebenso selbsttätig in demselben oder in einem anderen Niveau, insbesondere in einer anderen Maschinen- oder Gebäudeetage, einer Weiterverarbeitung zuzuführen sind.

Die erfindungsgemäße Lösung besteht für den einen Speicherplatz für jede Spule aufweisenden Spulenspeicher mit Spulentransport zwischen zwei Bearbeitungsstationen darin, daß als Speicherplatz für jede Spule eine pendelnde Einzelaufhängung in Reihe an einem Trolleyzug vorgesehen ist und daß der Trolleyzug auf einer eine Wendel enthaltenden Laufschiene geführt ist.

Durch die erfindungsgemäße Einzel-Pendelaufhängung jeder Spule an einem Trolleyzug mit in den Weg des Trolleyzugs integrierter Wendel wird erreicht, daß jede Spule ohne Berührung mit einer anderen Spule am Trolleyzug hängend zu transportieren und zu speichern ist, wobei die Wendel zugleich die Aufgabe eines Speichers und eines Mittels zum Heben oder Senken der einzelnen Spulen von einem zu einem anderen Niveau übernimmt.

Wenn die einzelnen Spulen in dichter Folge, beispielsweise entsprechend der Teilung der spulenbildenden Maschine, insbesondere Spinnmaschine, am Trolleyzug hängend aufeinander folgen sollen, können sich beim Übergang vom horizontalen Lauf in die Wendel Schwierigkeiten ergeben, weil dann der horizontale Abstand von Spule zu Spule geringer wird, so daß sich die einzelnen Spulenkörper mehr oder weniger stark berühren und aneinander reiben können. Gemäß weiterer Erfindung läßt sich die Speicherkapazität bei Verminderung der Gefahr einer gegenseitigen Beschädigung der Spulen vergrößern, wenn die Spulen paarweise jeweils an einem am Trolleyzug befestigten Bügel angehängt werden, der um eine im wesentlichen vertikale Achse schwenkbar ist. Beim Abheben von der Spinnmaschine oder dergleichen werden dann die Bügel in Transportrichtung des horizontal laufenden Zugs geschwenkt, während sie im schräg aufwärts oder abwärts führenden Lauf der Wendel quer zur Transportrichtung stehen sollen. Zum automatischen Ausführen der Umschwenkbewegung kann in den Weg des Trolleyzugs an einer Position vor Übergang von der Horizontalen in die Wendel und am Ausgang der Wendel ein die vorbeilaufenden Brücken an einem am letzteren befestigten Drehkreuz angreifender und dadurch um jeweils 90° umschwenkender Anschlag vorgesehen werden.

Wenn eine Höhendifferenz beim Transport oder Speichern der Spulen nicht zu überwinden ist oder wenn eine Höhendifferenz für die erforderliche Speicherkapazität nicht ausreicht, kann es gemäß weiterer Erfindung vorteilhaft sein, eine Doppelwendel mit zunächst aufwärts verlaufender Wendel und dann innerhalb oder außerhalb des ersten Wendelteils abwärts verlaufender Wendel vorzusehen. Selbstverständlich kann die Reihenfolge von aufwärts und abwärts den Erfordernissen entsprechend gewählt werden.

Bei dem automatischen Spulentransport werden die Spulen von einer zu einer nächsten Bearbeitungsstation gebracht. In der Praxis tritt dann das Erfordernis auf, die in der zweiten Bearbeitungsstation geleerten Hülsen wieder zurück zur ersten Station zu bringen. Im Rahmen der erfindungsgemäßen Lösung kann dieser Rücktransport vorzugsweise durch das Zentrum der Wendel geführt werden, das gilt insbesondere dann, wenn die vollen Spulen vorher von unten nach oben transportiert worden waren. Wenn leere Hülsen von unten nach oben zurückzubringen sind, kann der Raum innerhalb der Wendel vorteilhaft für den Hülsentransport ausgenutzt werden, indem dort ein Hülsenaufzug oder dergleichen angeordnet wird.

Anhand der schematischen Darstellung eines Ausführungsbeispiels werden Einzelheiten der Erfindung erläutert.

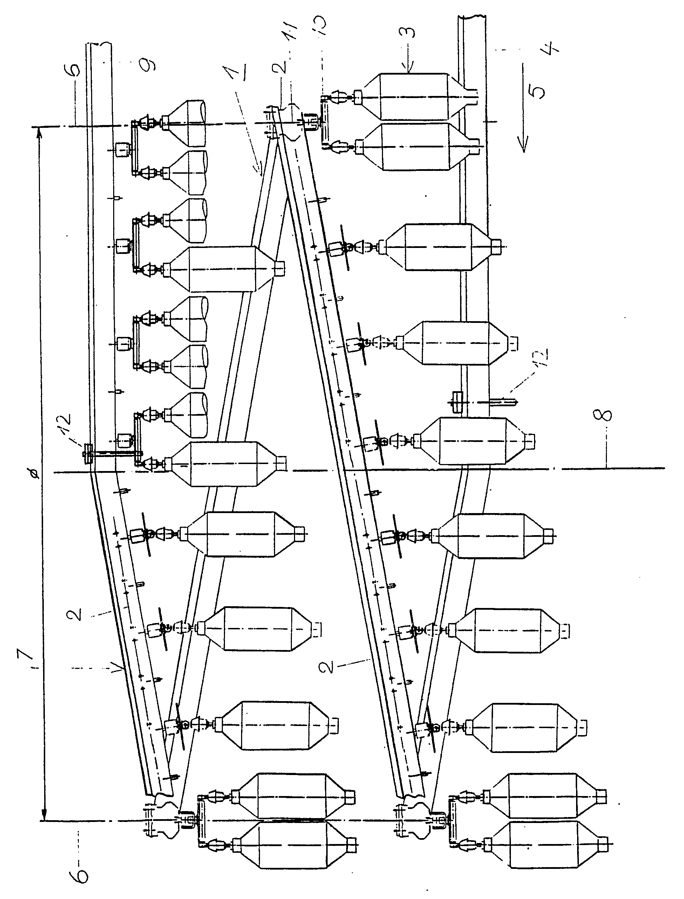

In der Zeichnung wird eine Schleife einer eine Wendel enthaltenden Laufschiene 1 mit darauf laufendem Trolleyzug 2 und an dem Trolleyzug 2 hängenden Spulen 3 symbolisch im Prinzip dargestellt. Die Laufschiene gemäß beiliegender Zeichnung besitzt eine in etwa horizontale Einlaufstrecke 4, aus der in Pfeilrichtung 5 ein endlicher oder endloser Trolleyzug 2 von einer spulenbildenden Station oder dergleichen herantransportiert wird. Auf die Einlaufstrecke 4 folgt der zwischen den gestrichelten Linien 6 dargestellte, als Wendel 7 mit Wendelachse 8, ausgebildete Speicher- bzw. Hubteil der Laufschiene 1. An die Wendel 7 - schließt sich ein wieder horizontales Auslaufteil 9 der Laufschiene 1 an, das zu einer weiteren Bearbeitungsstation führen kann.

Die einzelnen Spulen 3 hängen mit solchem gegenseitigem Abstand an dem Trolleyzug 2, daß bei horizontalem Betrieb eine gegenseitige, Schädigungen verursachende Berührung der Spulen 3 nicht auftreten kann. Der gegenseitige Abstand der Spulen 3 kann auch bereits in der horizontalen Einlaufstrecke 4 so eingestellt sein, daß die Spulen sich auch in der schräg aufwärts verlaufenden Wendel 7 nicht gegenseitig reiben können.

Wenn die Wendel einen sehr steilen Gang haben soll und oder wenn die Spulen in der Horizontalen mit sehr geringem gegenseitigem Abstand (der Teilung der Spinnmaschine entsprechend) an dem Trolleyzug 2 hängen, kann es zweckmäßig sein, die Spulen paarweise an jeweils eine Brücke 10 zu befestigen, die um eine im wesentlichen vertikale Achse 11 relativ zum Trolleyzug 2 bzw. zur Laufschiene 1 schwenkbar ist. Die mit der Achse 11 am Trolleyzug 2 befestigte Brücke 10 bildet dann ein Verbindungsglied zwischen je einem Paar von Spulen 3 und dem jeweiligen Wagen des Trolleyzugs 2.

Am Übergang von einer horizontalen Einlaufstrecke 4 zu dem schräg verlaufenden Teil der Laufschiene 1 innerhalb der Wendel 7 kann dann ein Anschlag 12 vorgesehen werden, mit dessen Hilfe jede der vorbeilaufenden Brücken 10 um 90° geschwenkt wird, so daß der Abstand von Spule zu Spule auf etwa das Doppelte des Abstandes im horizontalen Lauf vergrössert wird. Am Ausgang der Wendel 7 kann ebenfalls ein Anschlag 12 vorgesehen werden, der die Brücke 10 wieder zurückschwenkt, so daß der Platzbedarf der Transportvorrichtung - gemessen quer zur Länge der Laufschiene 1 - minimal wird.

### Bezugszeichenliste

| | | |
|---|---|---|
| 1 = | | Laufschiene |
| 2 = | | Trolleyzug |
| 3 = | | Spule |
| 4 = | | Einlaufstrecke (1) |
| 5 = | | Transportrichtung |
| 6 = | | gestrichelte Linie |
| 7 = | | Wendel |
| 8 = | | Wendelachse |
| 9 = | | Auslaufstrecke (1) |
| 10 = | | Brücke |
| 11 = | | Achse (10) |
| 12 = | | Anschlag |

## Ansprüche

1. Spulenspeicher mit einem Speicherplatz für jede Spule (3) und mit Spulentransport zwischen zwei Bearbeitungsstationen, insbesondere zum Speichern und zum Transport bespulter Flyerhülsen,
**dadurch gekennzeichnet,**
daß als Speicherplatz für jede Spule (3) eine pendelnde Einzelaufhängung in Reihe an einem Trolleyzug (2) vorgesehen ist und daß der Trolleyzug (2) auf einer eine Wendel (7) enthaltenden Laufschiene (1) geführt ist.

2. Spulenspeicher nach Anspruch 1,
**dadurch gekennzeichnet,**
daß die Wendel (7) zugleich eine Transportverbindung zwischen zwei Maschinen- bzw. Gebäudeteilen bildet.

3. Spulenspeicher nach Anspruch 1 oder 2,
**dadurch gekennzeichnet,**
daß eine Doppelwendel mit innerhalb oder außerhalb eines ersten Wendelteils zurückführendem zweitem Wendelteil vorgesehen ist.

4. Spulenspeicher nach einem oder mehreren der Ansprüche 1 bis 3,
**dadurch gekennzeichnet,**

daß im Zentrum der Wendel (7) etwa parallel zur Wendelachse (8) ein Hülsenrücktransportmittel, insbesondere ein Schacht oder ein Aufzug, vorgesehen ist.

EP 0 297 332 A1

8766 DE

| Europäisches Patentamt | EUROPÄISCHER RECHERCHENBERICHT | Nummer der Anmeldung |
|---|---|---|
| | | EP 88 10 9363 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 828 682 (KLEIN) <br> * Spalte 6, Zeile 46 - Spalte 8, Zeile 43 * <br> --- | 1,2 | D 01 H 9/18 <br> B 65 G 19/02 <br> B 65 G 47/51 |
| Y | GB-A- 27 294 (BLEICHERT)(A.D. 1911) <br> * Das ganze Dokument * <br> --- | 1,2 | |
| E | EP-A-0 276 569 (HOWA MACHINERY LTD) <br> * Figuren * <br> --- | 1 | |
| A | NL-A-8 400 382 (S.W. KAAK) <br> --- | | |
| A | US-A-3 260 350 (A.J. MARTIN) <br> ----- | | |
| | | | **RECHERCHIERTE SACHGEBIETE (Int. Cl.4)** <br><br> D 01 H <br> B 65 H <br> B 65 G |
| Der vorliegende Recherchenbericht wurde für alle Patentansprüche erstellt | | | |

| Recherchenort | Abschlußdatum der Recherche | Prüfer |
|---|---|---|
| DEN HAAG | 11-10-1988 | D HULSTER E.W.F. |

EPO FORM 1503 03.82 (P0403)